# EUROPEAN PATENT SPECIFICATION

(11) **EP 4 293 393 B1**
(45) Date of publication and mention of the grant of the patent: **15.01.2025**
(21) Application number: 22461574.0
(22) Date of filing: 15.06.2022
(51) Int. Cl.: G01T 1/178

(54) **A RADON DETECTOR**
RADONDETEKTOR
DÉTECTEUR DE RADON

(43) Date of publication of application: 20.12.2023
(73) Proprietor: Uniwersytet Jagiellonski, 31-007 Krakow (PL)
(72) Inventor: ZUZEL, Grzegorz, 32-020 Wieliczka (PL); LOJEK, Konrad, 31-616 Krakow (PL); NIECKARZ, Zenon, 32-084 Brzoskwinia (PL)
(74) Representative: Kancelaria Eupatent.pl Sp. z.o.o

(56) References cited:
- WO-A1-2022/092708
- PEREZ-PEREZ J ET AL: "Radon Mitigation Applications at the Laboratorio Subterraneo de Canfranc (LSC)", ARXIV.ORG, CORNELL UNIVERSITY LIBRARY, 201 OLIN LIBRARY CORNELL UNIVERSITY ITHACA, NY 14853, 15 March 2022 (2022-03-15), XP091173210, Retrieved from the Internet <URL:https://www.mdpi.com/2218-1997/8/2/112> [retrieved on 20221012]
- PUSHKIN K ET AL: "Study of radon reduction in gases for rare event search experiments", ARXIV.ORG, CORNELL UNIVERSITY LIBRARY, 201 OLIN LIBRARY CORNELL UNIVERSITY ITHACA, NY 14853, 29 May 2018 (2018-05-29), XP080883482, Retrieved from the Internet <URL:https://www.sciencedirect.com/science/article/pii/S0168900218308131?casa_token=OkdFLF-VdkwAAAAA:aBoMjqWI09BchTA-EwwOv1hyQr3MnMtcYgoQwQl-d9Vdk_qHETvt4es8rteDuXRM2R30la5FYw> [retrieved on 20221012]

## Description

### TECHNICAL FIELD

The presented invention is related to a detector devoted to measurements of radon ²²²Rn and ²²⁰Rn concentrations: in real time in gases, in particular in the air.

### BACKGROUND

Radon is a radioactive noble gas, which is colorless and odorless. In nature, its most common isotopes are ²²²Rn (which belongs to the uranium chain (²³⁸U)), and ²²⁰Rn (which belongs to the thorium series (²³²Th)). Radon found naturally in the air comes i.a. from soil, bedrock and from groundwater ( due to presence of watersoluble radium salts), and it can enter into lungs with the inhaled air. Measurements of the specific activity of radon in the air, also referred to as measurements of radon concentration - are important e.g., from the point of view of determination of the level of radiological exposure. This is because the decay products of e.g., ²²²Rn, which are heavy metals and are also radioactive, may remain in the organism. The potential harmfulness of radon to animals, including humans, is mainly related to the short-lived products of its decay being the emitters of highly ionizing α particles: ²¹⁸Po and ²¹⁴Po. Polonium isotopes can be formed in the air and can be inhaled into the lungs (along with aerosols), wherein due to the emission of α radiation, they are considered harmful if they reach the body calls. ²¹⁸Po and ²¹⁴Po can also be formed directly in the lungs as a result of the decay of inhaled radon. It is estimated that radon and its daughters are responsible for more than half of the dose that a person takes annually from natural radiation sources. To assess the degree of risk in a given location or room, it is necessary to measure the radon concentration at a level of a few Bq/m³ or lower (wherein for ²²²Rn 1nJ = 0,18 Bq) - concentrations up to 300 Bq/m³ are considered safe.

Radon present in the air can also interfere negatively with some specialized devices, such as those used in laboratories to study extremely rare physical processes (nuclear decays beyond the Standard Model), or in the production of nanoelectronic circuits. For this reason, the so-called radon-free clean rooms are built, i.e., clean rooms with an atmosphere with the radon specific activity close to zero [in practice at the level of ~mBq/m³], to minimize the effect of deposition of its decay products (radioactive heavy metals) on surfaces. Ultrasensitive detectors are used to measure radon concentration in clean rooms of this type, having sensitivities at the level of 10 mBq/m³.

There are various radon detectors based on different principles: ionization pulse chambers, scintillation detectors with zinc sulphide activated with silver (ZnS(Ag)), α spectrometers with semiconductor silicon detectors, trace detectors of α particles in plastics CR-39 and LR-115 (solid state detectors), detectors with activated carbon, electret detectors etc.

There are also known radon calibration chambers for a controlled exposure of detectors to radon and its daughters. They enable calibration of the radon detector apparatus. However, chambers of this type are not capable of measuring concentration of radon in the environment.

There are known ²²²Rn and ²²⁰Rn detectors that operate based on the principle of an electrostatic collection of ionized atoms of radon daughters (²¹⁸Po/²¹⁴Po and ²¹⁶Po/²¹²Po) on the surface of a semiconductor sensor placed in the measurement chamber and connected to a high voltage, of the order of 2200 V. The semiconductor sensor converts the energies of α particles to electrical impulses with amplitudes proportional to their primary energies. The number of impulses is proportional to the number of α particles and, consequently, it is proportional to the concentration of ²¹⁸Po and ²¹⁶Po created in the detector. Since these radon daughter isotopes have shorter half-lives (3.05 min./0.15 s) as compared to the parent radon (3.82 days and 56 s), they are in a radioactive equilibrium with them (the activity of the derivatives is equal to the activity of radon). The detector system includes a pump for maintaining a preset air flow through the measurement chamber of constant volume. Depending on the air flow and chamber volume, different detection sensitivities can be obtained.

A publication by K. Pelczar, G. Zuzel, M. Wójcik, A. Pocar, An. Ianni, "An online radon monitor for low background detector assembly facilities", Eur. Phys. J. C 81 (2021) 86, presents a low background detector for continuous and real-time monitoring of ²²²Rn concentration in the air. The sensitivity of the presented device is a record 0.05 mBq/m³. The detector comprises a 450 I chamber with an oval shape similar to a flattened sphere, with an air inlet located at the bottom of the chamber and an air outlet located in the vault of the chamber, wherein a sensor for detecting α particles is installed in the air outlet. During the measurement, the air flows through the detector chamber at a predefined flow velocity, wherein the air movement is made of stainless steel to generate an electric field to push the ²²²Rn daughters (²¹⁸Po and ²¹⁴Po) onto the alpha particle detector.

A Polish patent PL212459 describes a detector for measuring radon decay products in the air, comprising a scintillation chamber having a height of 5 - 15 mm, for retaining and collecting radon decay products on internal walls covered with ZnS(Ag) and on a window made of plastic (so-called plexiglass). The chamber is coupled to a photomultiplier which has a photocathode powered by a voltage of 800-1000 V, of a negative polarity, and has a grounded cathode. During detection, air is passed through the chamber at a constant volumetric flow rate of 1 dm³/min., wherein the air stream is sucked into the chamber by a negative pressure pump, and after passing through the chamber, it is removed from its interior via an outlet stub pipe. This detector is installed in a light-tight housing.

A publication "Radon Mitigation Applications at the Laboratorio Subterraneo de Canfranc (LSC)" (by Perez-Perez J et al, XP091173210) discloses a Radon Abatement System that significantly reduces radon levels and describes a similar Radon detector to that in: K. Pelczar, G. Zuzel, M. Wójcik, A. Pocar, An. Ianni, "An online radon monitor for low background detector assembly facilities", Eur. Phys. J. C 81 (2021) 86.

A publication "Study of radon reduction in gases for rare event search experiments" (by Pushkin K et al, XP080883482) discloses studies of adsorption characteristics of radon in nitrogen, argon, and xenon gases using different charcoals at various temperatures.

A PCT Application WO2022092708 discloses essentially a device which is an improvement of pulsed ionization chambers by eliminating the problem of micro-discharges and it is used for measuring radon through pulse detection of alpha particles and, more particularly, for measuring radon wherein ion charges generated due to alpha particles generated during alpha decay of radon are pulsed and detected through a single probe rod, and the number of particles is counted without omission, even when alpha particles are generated in microscopic succession, thereby improving measurement accuracy of radon.

### SUMMARY

One of disadvantages of the known radon detectors equipped with a measurement chamber is its constant volume, which determines the constant volume of the gas being examined. Radon detectors having measurement chambers of large volumes (~500 l) require a lot of space for their installation, as well as corresponding operating equipment, which results in a high material and equipment costs of the detector itself, as well as high maintenance costs. In the case of large chambers, also the exchange of the examined gas volume takes some time, and this may introduce limitations in the use of the detector (limited frequency of measurements). On the other hand, chambers having a smaller volume generally are less sensitive and need significantly longer measurement time.

The aim of the presented invention is to develop a detector for measuring the radon concentration in gases, including air, which will solve most of the problems described above.

The detector according to the invention is according to the appended claims. In particular, it is based on a pressurized measurement chamber with at least one opening for supplying and discharging gas from the environment to the interior of the measurement chamber. Two sensors (alpha particle detectors) are applied for detection of alpha particles resulting from radioactive decays of the radon daughters produced in the gas present inside the measurement chamber and collected on the sensor surfaces. The detector is also equipped with a compressor for pressurizing the gas inside the measurement chamber. The gas inlet/outlet of the chamber are tightly closed, preferably by electromagnetic valves. For each of the sensors, the detector has a separate power supply system comprising high DC voltage supply for creation of an electric field in the chamber and a low DC voltage supply from a battery pack to bias the sensors. Moreover, each of the sensors is equipped with a charge sensitive pre-amplifier connected in series with a spectroscopic amplifier. The spectroscopic chain is mounted together with the battery power supply in a metal housing preventing the penetration of electromagnetic disturbances from the outside. In order to be processed the signal from each alpha detector is separated form high DC voltage by dedicated capacitors.

Such a design allows the gas to be compressed to a high pressure inside the chamber, preferably to a pressure in the range of 1 to 10 barg, for the duration of the measurement. As a result, high measurement sensitivities of about 1 mBq/m³, and more preferably 0.1 mBq/m³, can be obtained with a relatively small interior volume of the measurement chamber.

Applying high DC voltage to the alpha particle detectors, with the housing of the detector chamber being grounded (as opposed to solutions from the state of the art, where the housing was connected to high voltage, and the sensors were only biased with low voltage supplied from the battery), provides a significant simplification of the design of the entire detector by eliminating the need for electrical isolation of the housing from other components (e.g. from the gas supply system) by the use of special ceramic inserts, and by eliminating the need of additional protection of personnel against electric shock. The battery pack used to bias the sensors, which is located with other components in an electromagnetic shield also significantly reduces the noise level of the entire system.

Preferably, the signals from the measurement systems (spectroscopy amplifiers) are fed to an adder, wherein the output of the adder is connected to the multi-channel analyzer. The use of two α particle sensors allows for the simplification of the design of the detector chamber and the use of cylindrical geometry, while maintaining a high efficiency of radon detection.

Preferably, the high voltage applied to the alpha sensors to create the electric field in the detector is between 5 and 10 kV.

Preferably, the low voltage for biasing the alpha sensor is supplied from the battery and has a value from 35 to 45 V.

Preferably, the measurement chamber is in the form of a cylinder with a volume of 100 to 200 l, with a longitudinal axis, with two bases, wherein the alpha sensors are mounted at each base along its longitudinal axis.

Such a design with cylindrical geometry is relatively simple to manufacture, while the implementation of two sensors improves the efficiency of detecting radon daughters . Moreover, such an arrangement of the sensors allows for an optimal distribution of the electric field inside the cylindrical chamber, and thus a correspondingly high efficiency of radon daughters collection.

Preferably, the detector chamber has two openings, one opening made in each base, on the longitudinal axis of the chamber. Such an arrangement of openings enables faster emptying and filling of the chamber with portions of gas between successive measurements.

The openings are provided with gas-tight ports, preferably equipped with electromagnetic valves. They provide adequate gas tightness of the measurement chamber.

Preferably, each of the alpha sensor is installed axially on one of the flanges. Such design provides convenient and quick access to each of the sensors: by removing the flange attached to the chamber, the sensor is also removed. Thus, maintenance and possible repair or replacement of each of the sensors can be performed more efficiently.

Preferably, the detector is further equipped with a manifold or an appropriate panel for selecting and introducing gases into the measurement chamber. As a result, a single radon detector can be used to sample gases form different locations

Preferably, the detector is further equipped with the so-called slow control system for controlling and automation of all the operations of the radon detector.

The invention is further related to a method for measuring the activity concentration of radon and its daughters in gases by means of the radon detector described above. The procedure includes the following steps: filling the detector chamber with gas through at least one opening and compressing the gas to a pressure in the range of 100 to 1,000 kPa inside the chamber by means of a compressor, closing tightly the chamber, analysis of the signals from the alpha particle sensors generated as a result of radioactivity of radon and its daughters formed in the compressed gas present inside the measurement chamber.. Owing to this, a larger mass/volume of a gas can be accumulated in the chamber for the measurement, thus increasing the amount of radon in the chamber, which results in a higher sensitivity of the detector. The possibility of applying different pressures in the chamber, depending on the measurement needs, allows for a virtual change of the chamber capacity, because, depending on the pressure applied, a different mass/volume of a gas may be examined in the chamber of a fixed volume. Owing to this, the detection sensitivity adjusted to the concentration of radon in the examined gas can be obtained, which can reach even 0.1 mBq/m³.

### BRIEF DESCRIPTION OF DRAWINGS

The invention is shown by means of example embodiments in a drawing, wherein:
Fig. 1 shows a schematic view of the construction of the radon detector according to the invention;
Fig. 2 shows a functional diagram of the radon detector;
Fig. 3 shows a schematic diagram of the electrical system for powering the sensors and for recording the signal from the sensors;
Fig. 4 shows the result of a Monte Carlo simulation of the electric field lines generated in the radon detector with a cylindrical chamber and two alpha particle sensors positioned on the axis of the chamber, each at one base of the chamber. It was assumed that the electric potential generating the field is applied to the alpha particle sensors.

### DETAILED DESCRIPTION

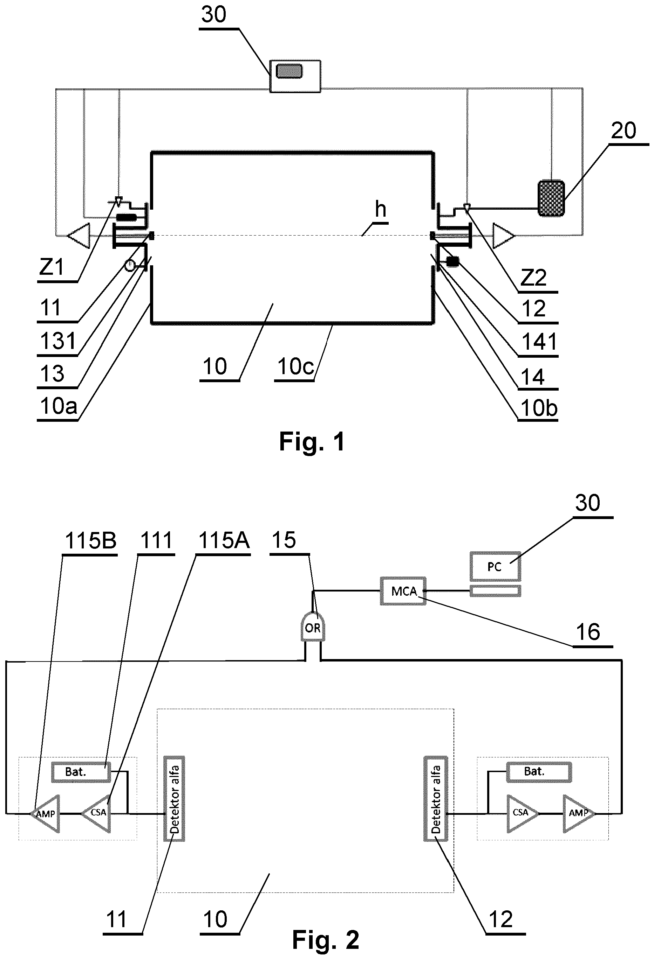

The detector, according to the invention, for measuring radon concentration in gases, including the air, is shown in Fig. 1 which illustrates the design features of the detector, and in Fig. 2, which illustrates the functional elements of the detector.

The detector is based on a measurement chamber 10, preferably in the shape of a cylinder or close to the shape of a cylinder. The volume of the measurement chamber 10 is limited by the side wall 10c extending between the two bases 10a, 10b. The bases 10a, 10b are preferably circular or have a shape close to a shape of a circle, such as oval. The measurement chamber 10 may have different volumes adjusted for given measurement needs, preferably a volume in the range 100 to 200 l, more preferably a volume of about 130 l, wherein the chamber is designed as a pressure vessel for holding gas therein for a measurement time, under the pressure of 1 - 10 barg, i.e., 100 - 1,000 kPa.

The measurement chamber 10 hosts two alpha particles sensors 11, 12. The first sensor 11 is installed at the first base 10a, and the second sensor 12 is installed at the second base 10b of the measurement chamber 10. Preferably, both sensors 11, 12 are installed along the longitudinal axis h of the measurement chamber 10. Each of the sensors 11, 12 is configured to detect alpha particles (α) generated during the decay of radioactive radon ²²²Rn and its daughters: ²¹⁸Po and ²¹⁴Po. The use of the two sensors 11, 12 located on the h axis of the measurement chamber 10 provides an improvement in the collection efficiency of the radon daughters. Each of the sensors 11, 12 has a large active area 11a, 12a, preferably equal to 1200 mm². For example, in the construction of the radon detector, sensors of the Ultra-AS type from Ortec^{®} having a diameter of 40 mm can be used.

Preferably, each sensor 11, 12 is a low background sensor - with low noise and low background - i.e., a negligible signal generated by the sensors 11, 12 themselves, since each of them is made of materials with a very low (negligible) content of radioactive isotopes.

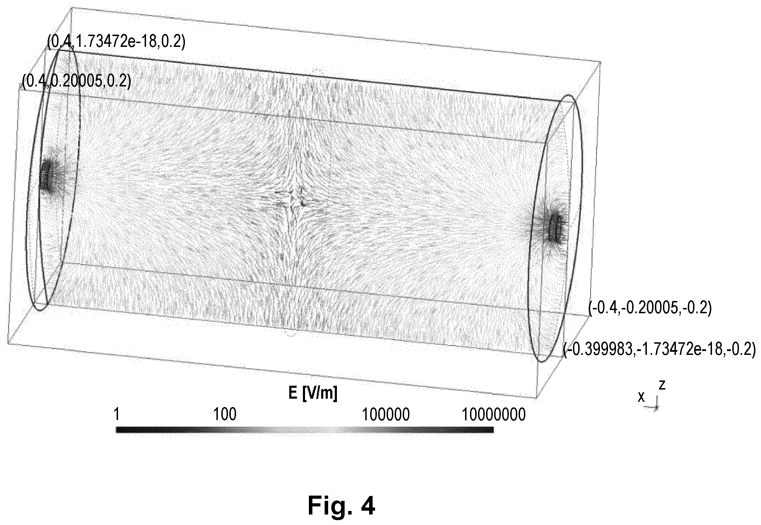

The measurement chamber 10 has at least one, and more preferably two gas-tightly closeable openings 13, 14 for transporting the gas between the interior of the measurement chamber 10 and the environment, for maintaining the gas under the pressure of 1 to 10 barg during the measurement and for installing sensors 11, 12. For example, one opening is a gas inlet 13 and the other one is a gas outlet 14. The openings 13, 14 can be made centrally, each opening 13, 14 in one base 10a, 10b of the measurement chamber 10, preferably on the longitudinal axis of the measurement chamber 10. Preferably, each opening 13, 14 is gas-tightly closed by a flange 131, 141, for example of the CF-200 type (Con Flate connector 200 mm in diameter and sealed with a copper gasket). For the discussed prototype of the radon detector provided with the flanges 131, 141, each of the sensors 11, 12 can be installed centrally in one flange 131, 141 with the active surface of the sensor 11, 12 located in the measurement chamber 10, preferably in the longitudinal axis of the measurement chamber 10 - as presented schematically in Fig. 1. This solution provides convenient and quick access to each of the sensors 11, 12: by decoupling the flange 131, 141 from the corresponding flange of the measurement chamber 10, the sensor 11, 12 is removed together with the flange. Thus, maintenance and possible repair or replacement each of the sensors 11, 12 can be performed very efficiently. Moreover, for the measurement chamber 10 in the form of a cylinder, the location of the active surfaces of the sensors 11, 12, to which the voltage is applied, on the longitudinal axis h of the chamber and aligned with the plane of the CF flange provides an optimal electric field distribution, and thus a correspondingly high collection efficiency of the radon daughters on the sensors 11, 12. The results of a Monte Carlo simulation presented in Fig 4, confirmed that 90% of the electric field lines (along which charged polonium ions drift) close on both active surfaces 11a, 12a of the sensors 11, 12. The active surfaces 11a, 12a are in the same plane as the openings 13, 14.

In addition, the location of two openings 13, 14 of the measurement chamber 10 on its opposite sides - each opening 13, 14 made centrally in the base 10a, 10b, ensures efficient transport of the gas portion between the measurement chamber 10 and the flange and finally the environment, quick introduction and removal of the portion of the examined gas respectively to and from the inside of the measurement chamber 10, and, if necessary, flushing the inside of the measurement chamber 10 with radon-free gas between consecutive measurements. The gas is introduced into the flange through the valves (solenoid/electromagnetic valves) Z1, Z2 mounted on the rear covers of the flange 131, 141. These covers also constitute the base on which the sensors 11, 12 are mounted through the suitable Teflon supports. The covers also have electrical feedthroughs (SHV type) used to supply high voltage and bias voltage of the sensors 11, 12.

At the inlet and at the outlet of the chamber, on the flanges installed on the openings 13 and 14, solenoid/electromagnetic valves Z1 and Z2 are mounted.

The radon detector is equipped with a compressor 20 for pressurizing the gas in the chamber during the measurement. Furthermore, the detector comprises a dedicated unit 30 for controlling/automation of its operation, including periodical compression of the examined gas in the chamber. An oil-free compressor may be used, preferably with a metal diaphragm to achieve the required pressures in the chamber.

The radon detector may furthermore be equipped with a gas supply system (not shown in Fig 1 for the sake of clarity), for example in the form of a manifold or a panel, allowing for selection of the source of the gas to be examined. The gas (air) may be sampled from different locations (e.g., rooms) to one or both of the openings 13 14 of the measurement chamber 10. The supply system may be connected to the detector control unit 30 to automatically, e.g., as programmed, select the location form where the examined gas is received and to couple the gas selection process with the measurement itself. As a result, measurements with a single radon detector can be carried out cyclically from many different locations (supply points). Described gas supply system may be equipped with electromagnetic valves and pumps/compressors, each installed at the inlet at a specified supply location.

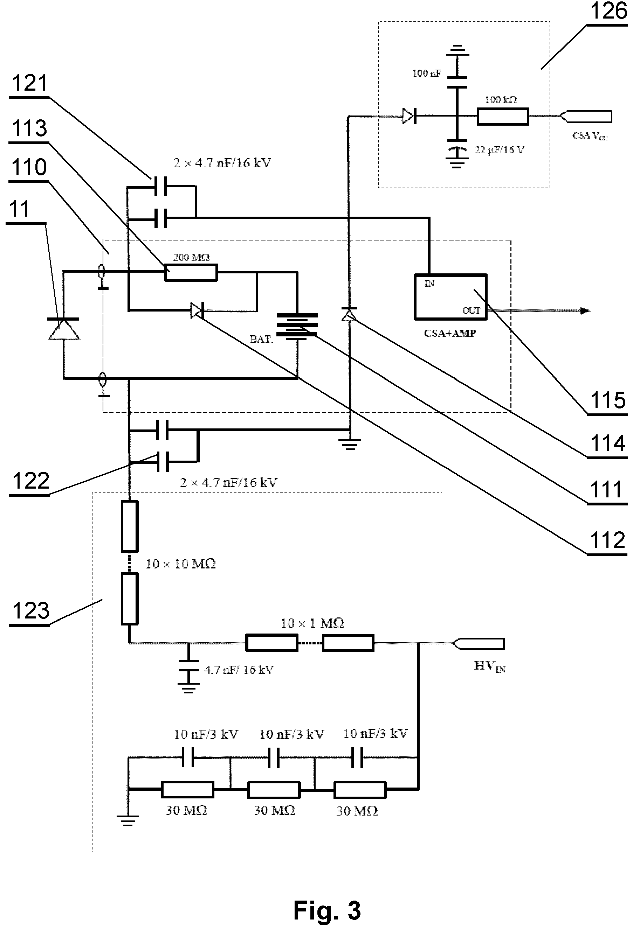

Each sensor 11, 12 is connected to the power supply and a measuring/spectroscopy system shown in detail in Fig. 3, as an example for the sensor 11.

In contrast to most of the prior solutions, in the present invention high voltage generating an electric field in the detector chamber is applied to the alpha sensors wherein the chamber housing is grounded. The sensor 11 is biased with a low DC voltage from a battery pack 111 at the level of 35 to 45 V, preferably 40 V, via the resistor 113. The sensor 11 is further supplied with a high voltage HV_{IN} ranging from 5 to 10 kV, preferably 8 kV, through the filter 123. Thus, on one of the electrodes of the sensor 11 (housing) a voltage HV_{IN} (for example, 8 kV) is present, and on the other electrode (active surface) a voltage of HV_{IN} + BAT (for example, 8040 V) is present. There is therefore a potential difference on the electrodes of the sensor 11, which enables its correct polarization, and thus registration of alpha particles.

The signals from the sensor 11 are read by an amplifying system 115 which comprises a charge-sensitive pre-amplifier (CSA) 115A connected in series with the spectroscopy amplifier 115B which amplifies the weak impulse from the charge-sensitive pre-amplifier 115A up to several hundred times. The capacitors 121, 122 filter the constant component of the high voltage, so that only the pulses from the sensor 11, observed after the decay of the polonium ion on the surface of the sensor 11, enter the amplifying system 115.

The amplifying system 115 is supplied with the Vcc voltage filtered by the filtering system 126. In addition, the system comprises diodes 112, 114 protecting the system against breakdown due to charge that could arise as a result of uncontrolled discharge of the capacitors 121, 122.

Thus, a charge impulse (in the form of a voltage spike with a duration of less than 1 microsecond and an amplitude of several tens up to several hundreds of mV) enters the input IN of the amplifying system 115. It is important to filter out any external disturbances that could come from the outside - for this reason, the systems 111-115 are mounted in a common metal cover 110, which serves as an electromagnetic shield (Faraday box) against external disturbances.

An output OUT from the amplifying systems 115 supplying the amplified signal from the sensors 11, 12 is sent to the adder 15 (OR type), wherein the signal from one or both sensors 11, 12 is present on the adder output. The signal from the adder 15 is sent next to the multi-channel analyser 16, which generates an energy spectrum that can be displayed and analysed by software installed on the controller 30 (e.g. on a PC type computer).

The measurement of the radon concentration in the gas by the radon detector according to the presented invention is carried out with a sealed measurement chamber 10 containing the examined gas compressed to a pressure of 1 - 10 barg. More specifically: in order to carry out the measurement, a predetermined volume of gas (e.g. air) is pumped into the measurement chamber 10 by the compressor 20 until a predefined pressure value (in the range of 1-10 barg) in the measurement chamber 10 is reached and the solenoid valves, mounted on the flanges installed in the openings 13, 14, are tightly closed. Then, the measurement begins. Namely: after reaching the required gas pressure in the measurement chamber 10, in a specific time interval, which allows to register an assumed number of radioactive decays, depending on the needs in terms of measurement accuracy. For example from 100 to 500 decays may be recorded (basically, the more decays are registered, the smaller the statistical error is) simultaneously by means of both sensors 11, 12 - to which a suitable voltage is applied in the range from 5 to 10 kV, preferably 8 kV, the alpha particles generated by the decays of polonium isotopes produced in the gas being under pressure in the chamber and deposited on the sensor 11 or 12, as a result of drift in the electric field, are counted. After the measurement is completed, the gas is removed from the chamber. According to the abovementioned method, with the aid of a radon detector, measurements can be carried out sequentially. If the measurements are carried out in a sequence, a real time monitoring may be realized.

If the concentration of radon in the examined gas is relatively low, the pressure of the gas in the measurement chamber 10 can be increased, thus one increases the effective mass/volume of the gas portion which is examined at a time. This is obtained by the use of the compressor 20, the gas-tight closing solenoid valves mounted on the flanges installed on the openings 13, 14, and the design of the chamber which is suitable to withstand the high pressure. For example, for the air as the gas to be examined, the cylindrical measurement chamber 10 with a capacity of 130 litters, for the gas pressure equal to 1 barg - 260 litters of air is introduced, and at a pressure equal to 10 barg, for the measurement chamber 10 of the same volume (130 l), 1430 litters of air is introduced. Moreover, by adjusting the gas pressure in the range of 1-10 barg in the chamber, one enables optimization of the measurement time -for a given concentration and required accuracy it is possible to measure shorter by applying higher pressure. Moreover, by means of the compressor it is possible to force a rapid gas exchange (flushing) in the measurement chamber 10 in order to start a new measurement in case the measured concentrations of the activity of radon and its daughters are high.

Thus, the developed design of the radon detector allows for a high measurement sensitivity equal up to 0.1 mBq/m³, while maintaining a relatively small chamber capacity. The detection sensitivity of the device can be adopted to the measurement needs. For higher radon concentrations in the examined gas, lower gas pressures in the chamber can be applied - thus subjecting a single detection to a smaller mass/volume of the gas, and for lower radon concentrations, pressures up to 10 barg may be applied, thus conducting a one-time detection of radon in a much larger mass/volume of the gas. Moreover, thanks to the possibility of increasing the volume of the examined gas, the measurement can be performed faster, which significantly improves the efficiency of the measurement process.

An additional improvement of the sensitivity of the detector according to the invention can be achieved by electro-polishing of the inner surface of the measurement chamber 10, the use of connectors and valves sealed with metal gaskets, and the use of materials with possibly low radon emanation for the construction of the detector.

### Example embodiment

A prototype detector was constructed with a cylindrical measurement chamber 10 with capacity of 130 l, an electropolished inner surface, and with two alpha particles sensors 11, 12. ORTEC Ultra-AS diodes were used with a diameter equal to 40 mm, installed on the axis of the measurement chamber, each at one base of the cylindrical chamber. Using the electronic circuit shown in Fig. 3, the high voltage HV_{IN} equal to 8 kV and the polarizing voltage from the battery pack 111 equal to 40 V were supplied to the alpha sensors. The measurement chamber 10 was filled with air from a clean room. The air was pressurized to 3 barg in the detector chamber. A measurement was carried out for 6 hours, after which the air was removed from the chamber. The measured radon concentration in the examined air was (120 ± 25) mBq/m³.

## Claims

1. A detector for measuring radon concentration in gases, comprising:
- a pressurised measurement chamber with at least one opening for supplying and discharging gas from the environment to the interior of the measurement chamber; and
- sensors of alpha particles generated as a result of radioactive decays of radon daughters in the gas present inside the measurement chamber and drifted to the sensor surfaces;
**characterized in that** it further comprises:
- a compressor (20) for pressurizing the gas inside the measurement chamber (10), wherein each opening (13, 14) of the measurement chamber (10) is equipped with gas-tight ports;
- wherein each of the sensors (11, 12) is a semiconductor sensor that has a separate power supply system comprising a high DC voltage (HV_{IN}) supply (123) connected to a housing and to the active electrode of the sensor for creating an electric field in the chamber, and a low DC voltage supply (113) from a battery pack (111) connected only to an active surface electrode of the sensor for use as a bias voltage;
- wherein the measurement chamber (10) is grounded;
- for each of the sensors (11, 12), an amplifying system (115) comprising a charge sensitive pre-amplifier (115A) connected in series with the spectroscopy amplifier (115B), wherein the amplifying system (115) is mounted together with the battery pack (111) in a metal housing preventing penetration of electromagnetic noise from the outside;
- wherein the signal from each sensor (11, 12) is fed to a corresponding amplifying system (115) via capacitors (121, 122) adapted to filter the output signal of the sensors from the high DC voltage level (HV_{IN}).

2. The detector according to claim 1, wherein the signals from the amplifying systems (115) are fed to an adder (15), wherein an output of the adder (15) is connected to a multi-channel analyser (16).

3. The detector according to any of previous claims, wherein the high voltage (HV_{IN}) is equal from 5 to 10 kV.

4. The detector according to any of previous claims, wherein the low voltage for biasing the sensor (11, 12) is supplied from the battery pack (111) and has a value from 35 to 45 V.

5. The detector according to any of previous claims, wherein the measurement chamber (10) is in the form of a cylinder with a volume from 100 to 200 l, with a longitudinal axis (h), with two bases (10a, 10b), wherein at each base (10a, 10b) on its longitudinal axis (h) the sensor (11, 12) is mounted.

6. The detector according to claim 4, wherein the measurement chamber (10) has two openings (13, 14), one opening (13, 14) in each base (10a, 10b), on the longitudinal axis (h) of the measurement chamber (10).

7. The detector according to any of previous claims, wherein the openings (13, 14) are provided with means for gas-tight closing of the measurement chamber (10) constituting flanges (131, 141) with solenoid valves.

8. The detector according to claim 6, wherein each of the sensors (11, 12) is installed coaxially on one of the flanges (131, 134).

9. The detector according to any of previous claims, wherein the detector further comprises a manifold or gas panel for selection of gases to be sampled into the measurement chamber (10).

10. The detector according to one of previous claims, wherein the detector further comprises a unit (30) for controlling and automating of the radon detection process.

11. A method for measuring the activity concentration of radon and its daughters in gases using a radon detector according to any of claims 1 to 10, **characterized in that** it comprises the steps of:
- filling the measurement chamber (10) with gas through at least one opening (13, 14) and compressing the gas to a pressure in the range of 100 to 1000 kPa inside the chamber by a compressor (20); and
- analysing signals from the sensors (11, 12) of alpha particles which are generated as a result of the radioactivity of radon and its daughters formed in the compressed gas inside the measurement chamber (10) and deposited on the sensor surfaces (11, 12), with tightly closed openings (13, 14) of the measurement chamber (10).

## Patentansprüche

1. Detektor zum Messen der Radonkonzentration in Gasen, umfassend:
- eine unter Druck stehende Messkammer mit mindestens einer Öffnung zum Zuführen und Ablassen von Gas aus der Umgebung in das Innere der Messkammer; und
- Sensoren für Alphateilchen, die als Folge des radioaktiven Zerfalls von Radon-Tochterprodukten im Gas, das innerhalb der Messkammer vorhanden ist, erzeugt werden und zu den Sensoroberflächen getrieben werden;
**dadurch gekennzeichnet, dass** er ferner umfasst:
- einen Kompressor (20) zum Unterdrucksetzen des Gases innerhalb der Messkammer (10), wobei jede Öffnung (13, 14) der Messkammer (10) mit gasdichten Anschlüssen ausgestattet ist;
- wobei jeder der Sensoren (11, 12) ein Halbleitersensor ist, der ein separates Stromversorgungssystem aufweist, das eine Hochgleichspannungsversorgung (HV_{IN}) (123), die mit einem Gehäuse und der aktiven Elektrode des Sensors verbunden ist, um in der Kammer ein elektrisches Feld zu schaffen, und eine Niedergleichspannungsversorgung (113) von einem Batteriepack (111), die nur mit einer aktiven Oberflächenelektrode des Sensors verbunden ist, zur Verwendung als Vorspannung umfasst;
- wobei die Messkammer (10) geerdet ist;
- für jeden der Sensoren (11, 12) ein Verstärkersystem (115), das einen ladungsempfindlichen Vorverstärker (115A) umfasst, der in Reihe mit dem Spektroskopieverstärker (115B) geschaltet ist, wobei das Verstärkersystem (115) zusammen mit dem Batteriepack (111) in einem Metallgehäuse montiert ist, das das Eindringen von elektromagnetischem Rauschen von außen verhindert;
- wobei das Signal von jedem Sensor (11, 12) über Kondensatoren (121, 122), die dazu angepasst sind, das Ausgangssignal der Sensoren vom Hochgleichspannungspegel (HV_{IN}) zu filtern, einem entsprechenden Verstärkersystem (115) zugeführt wird.

2. Detektor nach Anspruch 1, wobei die Signale von den Verstärkersystemen (115) einem Addierer (15) zugeführt werden, wobei ein Ausgang des Addierers (15) mit einem Mehrkanalanalysator (16) verbunden ist.

3. Detektor nach einem der vorhergehenden Ansprüche, wobei die Hochspannung (HV_{IN}) 5 bis 10 kV beträgt.

4. Detektor nach einem der vorhergehenden Ansprüche, wobei die Niederspannung zum Vorspannen des Sensors (11, 12) vom Batteriepack (111) geliefert wird und einen Wert von 35 bis 45 V aufweist.

5. Detektor nach einem der vorhergehenden Ansprüche, wobei die Messkammer (10) in der Form eines Zylinders mit einem Volumen von 100 bis 200 1 mit einer Längsachse (h) und zwei Grundflächen (10a, 10b) ist, wobei an jeder Grundfläche (10a, 10b) auf ihrer Längsachse (h) der Sensor (11, 12) montiert ist.

6. Detektor nach Anspruch 4, wobei die Messkammer (10) zwei Öffnungen (13, 14) aufweist, wobei sich in jeder Grundfläche (10a, 10b) eine Öffnung (13, 14) auf der Längsachse (h) der Messkammer (10) befindet.

7. Detektor nach einem der vorhergehenden Ansprüche, wobei die Öffnungen (13, 14) mit Mitteln zum gasdichten Verschließen der Messkammer (10) versehen sind, welche aus Flanschen (131, 141) mit Magnetventilen bestehen.

8. Detektor nach Anspruch 6, wobei jeder der Sensoren (11, 12) koaxial auf einem der Flansche (131, 134) installiert ist.

9. Detektor nach einem der vorhergehenden Ansprüche, wobei der Detektor ferner einen Verteiler oder ein Gaspanel zur Auswahl von in die Messkammer (10) zu beprobenden Gasen umfasst.

10. Detektor nach einem der vorhergehenden Ansprüche, wobei der Detektor ferner eine Einheit (30) zum Steuern und Automatisieren des Radon-Detektionsprozesses umfasst.

11. Verfahren zum Messen der Aktivitätskonzentration von Radon und seinen Tochterprodukten in Gasen unter Verwendung eines Radondetektors nach einem der Ansprüche 1 bis 10, **dadurch gekennzeichnet, dass** es die Schritte umfasst:
- Füllen der Messkammer (10) mit Gas durch mindestens eine Öffnung (13, 14) und Komprimieren des Gases auf einen Druck im Bereich von 100 bis 1000 kPa innerhalb der Kammer durch einen Kompressor (20); und
- Analysieren von Signalen von den Sensoren (11, 12) von Alphateilchen, die als Folge der Radioaktivität von Radon und seinen Tochterprodukten erzeugt werden, die sich in dem komprimierten Gas innerhalb der Messkammer (10) bilden und sich auf den Sensoroberflächen (11, 12) ablagern, bei dicht geschlossenen Öffnungen (13, 14) der Messkammer (10).

## Revendications

1. Détecteur permettant de mesurer la concentration de radon dans des gaz, comprenant :
- une chambre de mesure sous pression comportant au moins une ouverture permettant de fournir et d'évacuer un gaz de l'environnement vers l'intérieur de la chambre de mesure ; et
- des capteurs de particules alpha générées à la suite de désintégrations radioactives de produits de filiation du radon dans le gaz présent à l'intérieur de la chambre de mesure et dérivées vers les surfaces de capteurs ;
**caractérisé en ce qu'**il comprend en outre :
- un compresseur (20) pour mettre sous pression le gaz à l'intérieur de la chambre de mesure (10), dans lequel chaque ouverture (13, 14) de la chambre de mesure (10) est équipée d'orifices étanches au gaz ;
- dans lequel chacun des capteurs (11, 12) est un capteur à semi-conducteur qui possède un système d'alimentation séparé comprenant une alimentation haute tension CC (HV_{IN}) (123) connectée à un boîtier et à l'électrode active du capteur pour créer un champ électrique dans la chambre, et une alimentation basse tension CC (113) provenant d'un bloc-batterie (111) connecté uniquement à une électrode de surface active du capteur pour une utilisation en tant que tension de polarisation ;
- dans lequel la chambre de mesure (10) est mise à la terre ;
- pour chacun des capteurs (11, 12), un système d'amplification (115) comprenant un préamplificateur sensible à la charge (115A) connecté en série avec l'amplificateur de spectroscopie (115B), dans lequel le système d'amplification (115) est monté avec le bloc-batterie (111) dans un boîtier métallique empêchant la pénétration de bruit électromagnétique depuis l'extérieur ;
- dans lequel le signal provenant de chaque capteur (11, 12) est transmis à un système d'amplification (115) correspondant par l'intermédiaire de condensateurs (121, 122) adaptés pour filtrer le signal de sortie des capteurs du niveau de haute tension CC (HV_{IN}).

2. Détecteur selon la revendication 1, dans lequel les signaux provenant des systèmes d'amplification (115) sont transmis à un additionneur (15), dans lequel une sortie de l'additionneur (15) est connectée à un analyseur à canaux multiples (16).

3. Détecteur selon l'une quelconque des revendications précédentes, dans lequel la haute tension (HV_{IN}) est égale à 5 à 10 kV.

4. Détecteur selon l'une quelconque des revendications précédentes, dans lequel la basse tension de polarisation du capteur (11, 12) est fournie par le bloc-batterie (111) et a une valeur de 35 à 45 V.

5. Détecteur selon l'une quelconque des revendications précédentes, dans lequel la chambre de mesure (10) se présente sous la forme d'un cylindre d'un volume de 100 à 200 1, avec un axe longitudinal (h), avec deux bases (10a, 10b), dans lequel à chaque base (10a, 10b) sur son axe longitudinal (h) le capteur (11, 12) est monté.

6. Détecteur selon la revendication 4, dans lequel la chambre de mesure (10) comporte deux ouvertures (13, 14), une ouverture (13, 14) dans chaque base (10a, 10b), sur l'axe longitudinal (h) de la chambre de mesure (10).

7. Détecteur selon l'une quelconque des revendications précédentes, dans lequel les ouvertures (13, 14) sont dotées de moyens de fermeture étanche au gaz de la chambre de mesure (10) constituant des brides (131, 141) à électrovannes.

8. Détecteur selon la revendication 6, dans lequel chacun des capteurs (11, 12) est installé de manière coaxiale sur l'une des brides (131, 134).

9. Détecteur selon l'une quelconque des revendications précédentes, dans lequel le détecteur comprend en outre un collecteur ou un panneau de gaz pour la sélection de gaz à échantillonner dans la chambre de mesure (10).

10. Détecteur selon l'une des revendications précédentes, dans lequel le détecteur comprend en outre une unité (30) pour commander et automatiser le processus de détection de radon.

11. Procédé permettant de mesurer l'activité volumique du radon et de ses produits de filiation dans des gaz à l'aide d'un détecteur de radon selon l'une quelconque des revendications 1 à 10, **caractérisé en ce qu'**il comprend les étapes de :
- remplissage de la chambre de mesure (10) avec du gaz par au moins une ouverture (13, 14) et la compression du gaz à une pression comprise dans la plage de 100 à 1000 kPa à l'intérieur de la chambre par un compresseur (20) ; et
- analyse de signaux provenant des capteurs (11, 12) de particules alpha qui sont générées suite à la radioactivité du radon et de ses produits de filiation formés dans le gaz comprimé à l'intérieur de la chambre de mesure (10) et déposés sur les surfaces de capteurs (11, 12), les ouvertures (13, 14) de la chambre de mesure (10) étant fermées de manière étanche.
